# EUROPEAN PATENT APPLICATION

(11) **EP 4 503 542 A1**
(43) Date of publication of application: **05.02.2025**
(21) Application number: 23799619.4
(22) Date of filing: 27.04.2023
(51) Int. Cl.: H04L 41/16, H04L 41/14, H04L 67/51, H04L 41/0695, G06N 20/00

(54) **METHOD AND DEVICE FOR MANAGING FEDERATED MACHINE LEARNING PERFORMANCE IN MOBILE COMMUNICATION SYSTEM**

(30) Priority: 04.05.2022 KR 20220055463
(71) Applicant: Samsung Electronics Co., Ltd., Suwon-si, Gyeonggi-do 16677 (KR)
(72) Inventor: KIM, Hyesung, Suwon-si, Gyeonggi-do 16677 (KR); PARK, Jungshin, Suwon-si, Gyeonggi-do 16677 (KR); SUH, Dongeun, Suwon-si, Gyeonggi-do 16677 (KR)
(74) Representative: Gulde & Partner
(86) International application number: PCT/KR2023/005729
(87) International publication number: WO 2023/214736

(57) **Abstract**

The present disclosure relates to an operation method of a central NWDAF comprising the steps of: receiving an analytics request message from a network function; determining, on the basis of the analytics request message, a local NWDAF included in a federated learning (FL) group; transmitting an FL local behavior instruction to the local NWDAF; receiving a response message from the local NWDAF in response to the FL local behavior instruction; receiving, on the basis of the FL local behavior instruction, a local model generated by means of the local NWDAF from the local NWDAF; generating a global model on the basis of the local model; and transmitting the global model to the NWDAF.

## Description

### [Technical Field]

This disclosure relates to a wireless communication system, and more particularly, to a method and device for managing federated machine learning performance in a mobile communication system.

### [Background Art]

5G mobile communication technologies define broad frequency bands such that high transmission rates and new services are possible, and can be implemented not only in "Sub 6 GHz" bands such as 3.5 GHz, but also in "Above 6 GHz" bands referred to as mmWave including 28 GHz and 39 GHz. In addition, it has been considered to implement 6G mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low-Latency Communications (URLLC), and massive Machine-Type Communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large scale antennas, metamaterial-based lenses and antennas for improving coverage of terahertz band signals, high-dimensional space multiplexing technology using Orbital Angular Momentum (OAM), and Reconfigurable Intelligent Surface (RIS) technology, but also full duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

When a network data analytics function (NWDAF) service consumer requests an analytics service in a mobile network, the analytics service can provide the time to be required. In an NWDAF learning constitution that does not support federated learning, a training procedure is performed within a single entity, and a judgment on whether to provide a service and time management can be performed within a given time. In an NWDAF learning constitution that supports federated learning, training is performed within multiple local NWDAFs, and the operation of collecting them into a central NWDAF can occur repeatedly. In this case, time management in the training and collecting operations of individual local NWDAFs must be performed so that training can be completed and analytics service results can be provided within the time requested by the NWDAF service consumer.

In addition, when the NWDAF provides an analytics service through federated learning, since a plurality of NWDAFs participate in learning, abnormal events that may occur in individual NWDAFs must be monitored. The accuracy and completion time of federated learning can change depending on events that occur in individual local NWDAFs participating in federated learning. In order to perform stable federated learning between NWDAFs, a method for monitoring and responding to abnormal events is required.

### [Technical Solution]

An operation method of a central network data analytics function (NWDAF) according to the disclosure comprises receiving an analytics request message from a network function; determining, on the basis of the analytics request message, a local NWDAF included in a federated learning (FL) group; transmitting an FL local behavior instruction to the local NWDAF; receiving a response message from the local NWDAF in response to the FL local behavior instruction; receiving, on the basis of the FL local behavior instruction, a local model generated by means of the local NWDAF from the local NWDAF; generating a global model on the basis of the local model; and transmitting the global model to the NWDAF.

A central NWDAF according to the disclosure comprises a network interface; and a processor connected to the network interface. The processor receives an analytics request message from a network function, determines, on the basis of the analytics request message, a local NWDAF included in a federated learning (FL) group, transmits an FL local behavior instruction to the local NWDAF, receives a response message from the local NWDAF in response to the FL local behavior instruction, receives, on the basis of the FL local behavior instruction, a local model generated by means of the local NWDAF from the local NWDAF, generates a global model on the basis of the local model, and transmits the global model to the NWDAF.

### [Advantageous Effects]

When providing analytics services through federated learning, an NWDAF can complete learning within a given time and provide analytics service results. In addition, when an abnormal event occurs during the operation of performing federated learning, the NWDAF can respond to the abnormal event and ultimately provide analytics service results stably.

### [Brief description of Drawings]

FIG. 1 is a conceptual diagram illustrating a connection structure between NWDAFs for performing federated learning according to the disclosure.
FIG. 2 is a conceptual diagram illustrating in a 5G system supporting a NWDAF according to the disclosure.
FIG. 3 is a flowchart illustrating a procedure for performing time control at each operation of federated learning in a central NWDAF according to the disclosure.
FIG. 4 is a flowchart illustrating a procedure for generating a federated learning group to provide an analytics service to a central NWDAF according to the disclosure.
FIG. 5 is a flowchart illustrating a procedure for monitoring a delay situation occurrence event in a local NWDAF and notifying the central NWDAF of the event according to the disclosure.
FIG. 6 is a block diagram illustrating a central NWDAF according to the disclosure.
FIG. 7 is a block diagram illustrating a local NWDAF 1 according to the disclosure.
FIG. 8 is a block diagram illustrating a local NWDAF 2 according to the disclosure.

### [Mode for Disclosure]

Hereinafter, the operation principle of the disclosure will be described in detail with reference to the accompanying drawings. The terms which will be described below are terms defined in consideration of the functions in the disclosure, and may be different according to users, intentions of operators, or customs. Therefore, the definitions of the terms should be made based on the contents throughout the specification.

As used herein, terms with respect to network entities and edge computing system entities, terms with respect to messages, terms with respect to identification information, and the like are illustratively used for the sake of descriptive convenience. Therefore, the disclosure is not limited by the terms as used below, and other terms with respect to subjects having equivalent technical meanings may be used.

In the following description, the disclosure will be described using terms and names defined in the 5G system standards for the sake of descriptive convenience. However, the disclosure is not limited by these terms and names, and may be applied in the same way to systems that conform other standards.

The disclosure proposes a method for supporting federated learning in a mobile communication system. Specifically, in a structure that performs federated learning between a central NWDAF and a plurality of local NWDAFs, the disclosure proposes a time coordination method for providing analytics within a given time and a method for monitoring and responding to abnormal event occurrence during learning.

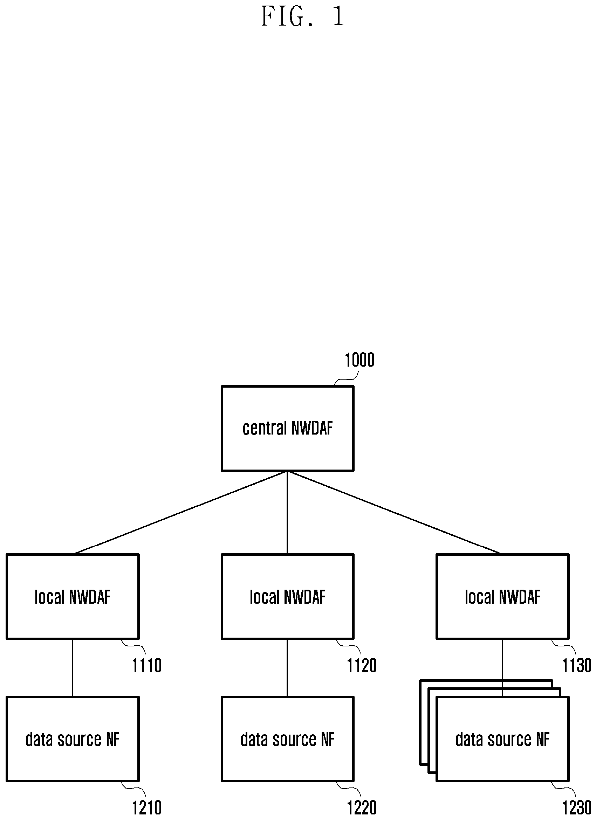

FIG. 1 is a conceptual diagram illustrating a connection structure between NWDAFs for performing federated learning according to the disclosure.

With respect to FIG. 1, multiple local NWDAFs 1110, 1120, 1130 may be respectively connected to each other based on a central NWDAF 1000 to carry out federated learning. The local NWDAFs 1110, 1120, 1130 may include a model training logical function (MTLF) and may perform machine learning (ML) model training by use of local data source network functions (NFs) 1210, 1220, 1230 (for example, NFs that are connected to the local NWDAFs and may provide the data they collect) or an operations, administration and maintenance (OAM) system, etc. connected thereto.

The central NWDAF 1000 may collect and calculate a learned ML model from the local NWDAFs 1110, 1120, 1130 locally distributed and thus generate a global machine learning (ML) model (or an aggregated machine learning model). The central NWDAF 1000 may distribute the generated global ML model to the local NWDAFs 1110, 1120, 1130 again. The local NWDAFs 1110, 1120, 1130 may train the local ML model based on the global ML model and transmit the local ML model updated as above to the central NWDAF 1000. The central NWDAF 1000 and local NWDAF 1110, 1120, 1130 may perform the aforementioned operations repeatedly until a model training condition predetermined is satisfied.

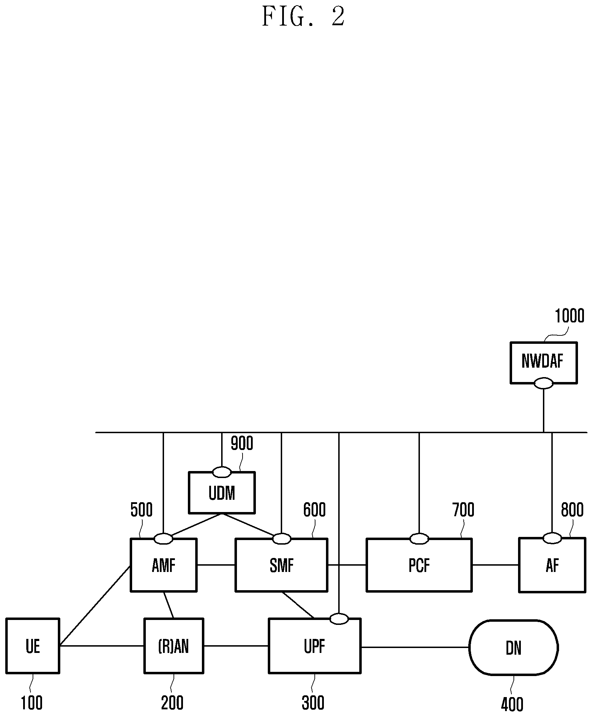

FIG. 2 is a conceptual diagram illustrating in a 5G system supporting a NWDAF according to the disclosure.

With reference to FIG. 2, an architecture of the 5G system supporting the NWDAF 1000 may include various network functions (NFs). For example, the architecture of the 5G system may include an access and mobility management function (AMF) 500, a session management function (SMF) 600, a policy control function (PCF) 700, an application function (AF) 800, a unified data management (UDM) 900, a data network (DN) 400, a user plane function (UPF) 300, a (radio) access network ((R)AN) 200, and a user equipment (UE) 100.

For example, the respective NFs may support the following functions.
- The AMF 500 may provide a function for UE-based access and mobility management, and may be connected to one AMF per UE by default.
- The DN 400 may mean, for example, a network outside a 5GS including an operator service, an internet access, a 3rd party service, or the like. The DN 400 may transmit a downlink protocol data unit (PDU) to the UPF 300, or receive a PDU transmitted from the UE 100 from the UPF 300.
- The PCF 700 may receive packet flow information from an application server, and provide a function of determining policies such as mobility management and session management. Specifically, the PCF 700 may support functions such as supporting a unified policy framework for controlling a network operation, providing a policy rule to allow control plane function(s) (e.g., the AMF 500, the SMF 600, etc.) to enforce the policy rule, and implementing a front end for accessing relevant subscription information to determine a policy within a user data repository (UDR).
- The SMF 600 may provide a session management function, and each session may be managed by a different SMF in a case where the UE 100 has a plurality of sessions.
- The UDM 900 may store user subscription data, policy data, or the like.
- The UPF 300 may forward the downlink PDU received from the DN 400 to the UE 100 via the (R)AN 200, and forward the uplink PDU received from the UE 100 to the DN 400 via the (R)AN 200.
- The AF 800 may interoperate with a 3GPP core network to provide a service (e.g., to support functions such as influencing an application on traffic routing, accessing network capability exposure, interacting with a policy framework for policy control).
- The NWDAF 1000 may include at least one function of an analytics logical function (AnLF) and a model training logical function (MTLF), and may collect data in the 5G system and provide an analytics service based on the collected data. For example, it may train the ML model based on the data and provide analytics data required for network management and operation based on the trained model.

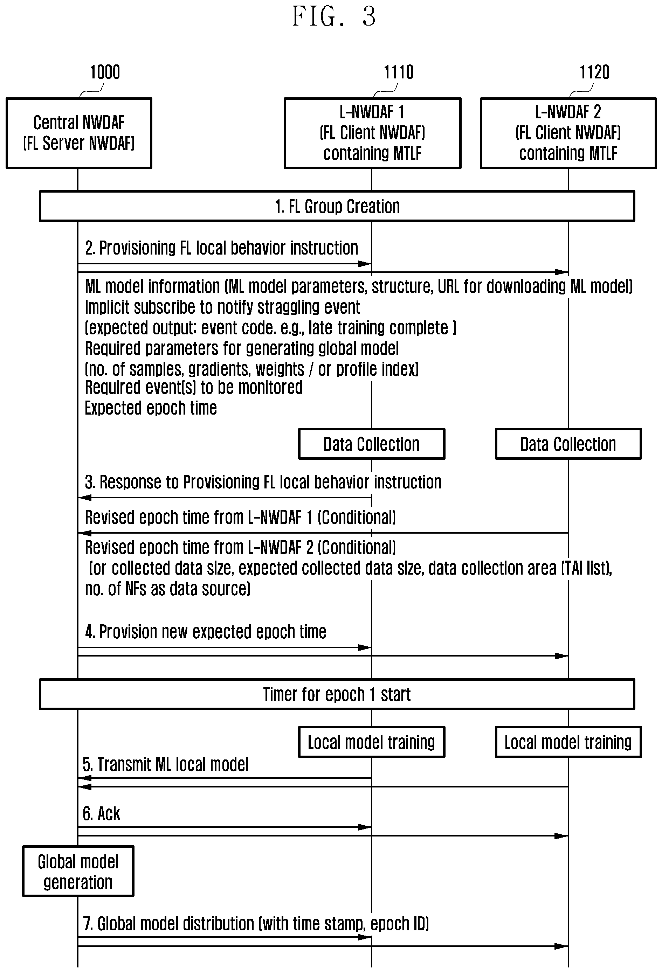

FIG. 3 is a flowchart illustrating a procedure for performing time control at each operation of federated learning in a central NWDAF according to the disclosure.

With respect to FIG. 3, in operation 1, the central NWDAF 1000 may generate a federated learning (FL) group. For example, the central NWDAF 1000 may receive analytic requests from analytic service consumers (e.g., network functions or other NWDAFs). The central NWDAF 1000 may determine to perform federated learning based on the analytic request. The central NWDAF 1000 may select the local NWDAFs 1110, 1120 that may participate in the federated learning based on the determination. The central NWDAF 1000 may generate a federated learning group (FL group) based on the selected local NWDAFs 1110, 1120.

In operation 2, the central NWDAF 1000 may provide a FL local behavior instruction to the local NWDAFs 1110, 1120 selected for performing federated learning in operation 1. For example, the central NWDAF 1000 may transmit a message including the FL local behavior instruction to the local NWDAFs 1110, 1120. For example, the FL local behavior instruction may include the following information:
- ML model information: Federated learning model parameters, model structure, possible model acquisition address (URL for downloading ML model)
- Required parameters for generating global model: Number of data samples used to generate local model, gradient value, weight value, or pre-promised profile index value
- List of events required to be monitored and reported: Event ID(s), including an event ID value representing at least one of the events, for example, late transmission (a reporting event that notifies that the local model training time in the local NWDAF 1110, 1120 has increased and the local model provision time to central NWDAF 1000 has been delayed), low accuracy (a reporting event that notifies that the accuracy of the local model trained in the local NWDAF 1110, 1120 is lower than a reference, in a case of instructing monitoring and reporting for low accuracy events, an accuracy threshold value may be provided together with an event identifier), data shortage occurrence (reporting event where data samples cannot be obtained due to an abnormal status of the data source that provides data samples for local model training in the local NWDAF 1110, 1120), and the like. Such an event may be expressed as a delay situation occurrence event (a straggling event), and a subscription may be formed in the form of an implicit subscribe to notify straggling event while providing a FL local behavior instruction rather than a separate subscription service. Alternatively, a subscription to notify straggling event may be performed through a separate subscription request.
- Epoch time requirement information
   a) Expected epoch time or expected local ML model training and transmission time: When performing federated learning, an expected time value from performing local model training in the local NWDAF 1110, 1120 to transmitting the local model that has completed the training to the central NWDAF 1000
   b) Local ML model training time requirement: A requirement value for the time taken from completing the local model training in the local NWDAF 1110, 1120 to transmitting the trained local model to the central NWDAF 1000

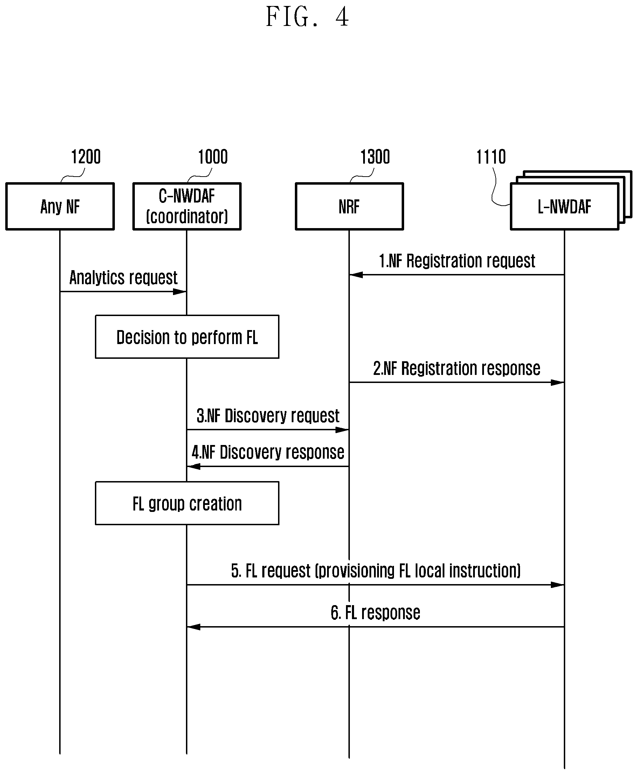

The expected epoch time or expected local ML model training and transmission time or local ML model training time requirement value may be provided as different values depending on the local NWDAF 1110, 1120 participating in federated learning, or as a unified single value. The detailed procedure involved is described through the following FIG. 4. For example, the expected epoch time, or expected local ML model training and transmission time, or local ML model training time requirement value may be configured to a different value for each local NWDAF 1110, 1120 based on the load status of each NWDAF 1110, 1120, the number of data samples, etc., which may affect the time taken for local model training. For example, the central NWDAF 1000 may determine the size of the federated learning epoch time requirement in proportion to the size of the data set included in the data information available for ML model training of the local NWDAF 1110, 1120 managed by the local NWDAF 1110, 1120, the number of network function instances or size of the network function set that may provide data by being connected to the local NWDAF 1110, 1120, the number of PDU sessions from which the local NWDAF 1110, 1120 may collect data, the number of data network names managed by the local NWDAF 1110, 1120, and the number of data network access identifiers. The information that the central NWDAF 1000 uses to determine the size of the federated learning epoch time requirement value may be obtained from a network repository function (NRF) 1300 in the local NWDAF search operation for generating the federated learning group, or may be obtained directly from the local NWDAF 1110, 1120 searched as a member of the federated learning group.

The local NWDAF 1110, 1120 may perform data collection based on the FL local behavior instruction from the central NWDAF 1000, respectively. For example, the local NWDAF 1110, 1120 may determine the load status of the local NWDAF 1110, 1120 or data sample information (the number of data samples or the expected number of obtainable data samples, the size of the data collection area (the number of tracking area IDs), and the number of network function instances available as data sources) through data collection.

In operation 3, the local NWDAF 1110, 1120 may transmit a response message for the FL local behavior instruction to the central NWDAF 1000. For example, the local NWDAF 1110, 1120 may determine whether the expected epoch time, expected local ML model training and transmission time, or local ML model training time requirement included in the FL local behavior instruction received from the central NWDAF 1000 may be met. For example, the local NWDAF 1110, 1120 may determine whether the expected epoch time, expected local ML model training and transmission time, or local ML model training time requirement included in the FL local behavior instruction may be met based on the load status of the local NWDAF 1110, 1120 or data sample information (the number of data samples or the expected number of obtainable data samples, the size of the data collection area (the number of tracking area IDs), and the number of network function instances available as data sources).

The local NWDAF 1110, 1120 may transmit a response message including an indicator indicating that the requirement is fully met to the central NWDAF 1000 in a case where the requirement is fully met.

If the local NWDAF 1110, 1120 determines that the requirement cannot be fully met, it may (1) generate a new corrected time value and transmit a response message including the corrected time value to the central NWDAF 1000, or (2) transmit a response message including an indicator indicating that the requirement cannot be fully met and data sample information to the central NWDAF 1000. The central NWDAF 1000 may receive the response message from the local NWDAF 1110, 1120. The central NWDAF 1000 may determine a new epoch time requirement based on the response message.

The response to the epoch time requirement received from the central NWDAF 1000 may vary depending on the local NWDAF 1110, 1120.

In operation 4, the central NWDAF 1000 may provide the new expected epoch time requirement to the local NWDAF 1110, 1120. For example, the central NWDAF 1000 may transmit a message including the new expected epoch time requirement to the local NWDAF 1110, 1120. For example, the central NWDAF 1000 may determine the new epoch time requirement based on the response message for the epoch time requirement received from the local NWDAF 1110, 1120. The central NWDAF 1000 may transmit a message including a value corresponding to the determined new epoch time requirement and an indicator indicating the start of federated learning to the local NWDAF 1110, 1120. The message may include a timestamp value (absolute time value) for performing synchronized federated learning.

For example, the central NWDAF 1000 may determine the largest epoch time value among the corrected epoch time requirements included in the response messages received from the local NWDAFs 1110, 1120 as a new epoch time value. The central NWDAF 1000 may generate a new epoch time requirement based on the determined new epoch time value. The central NWDAF 1000 may provide the generated new epoch time requirement to the local NWDAF 1110, 1120 participating in the federated learning.

Alternatively, the central NWDAF 1000 may determine to exclude a local NWDAF that has responded with an epoch time value exceeding a predetermined threshold value from the federated learning. The central NWDAF 1000 may transmit a message including an indicator of non-participation in federated learning to the local NWDAF that is determined to be excluded from the federated learning.

The central NWDAF 1000 may perform the above-described operations for the corrected epoch time requirement provided from the local NWDAF 1110, 1120 based on the operator policy or predefined rules.

The local NWDAF 1110, 1120 may receive a message including a new expected epoch time requirement from the central NWDAF 1000. The local NWDAF 1110, 1120 may perform local model training based on the new epoch time requirement and timestamp value included in the message received from the central NWDAF 1000. The local NWDAF 1110, 1120, 1130 may start a timer set to the epoch time requirement value at the same time as the local model training performance starts.

In operation 5, the local NWDAF 1110, 1120 may transmit the completed ML local model to the central NWDAF 1000. In addition, the local NWDAF 1110, 1120, 1130 may transmit, to the central NWDAF 1000, the required parameters for generating global model based on the FL local behavior instruction received in operation 2.

The central NWDAF 1000 may receive the completed ML local model from each of local NWDAFs 1110, 1120.

In operation 6, the central NWDAF 1000 may transmit an acknowledgement message for the local model received from the local NWDAF 1110, 1120 to the local NWDAF 1110, 1120.

The local NWDAF 1110, 1120 may receive an acknowledgement message from the central NWDAF 1000. The central NWDAF 1000 may generate a global model based on the ML local model received from the local NWDAF 1110, 1120 and the parameter values required to generate the global model.

In operation 7, the central NWDAF 1000 may transmit, to the local NWDAF 1110, 1120 participating in the federated learning, the generated global model, the epoch ID (an identifier indicating which number of epoch is the corresponding epoch), and the timestamp value.

FIG. 4 is a flowchart illustrating a procedure for generating a federated learning group to provide an analytics service to an NF at a central NWDAF according to the disclosure.

With reference to FIG. 4, an NF 1200 may transmit an analytic request message to a C-NWDAF 1000. The NF 1200 may be at least one of a data source NF 1210, a data source NF 1220, and a data source NF 1230. The NF 1200 may receive the analytic request message from the C-NWDAF 1000. The C-NWDAF 1000 may determine to perform FL.

In operation 1, a local NWDAF 1110, 1120, 1130 which may participate in the federated learning and serve as the local NWDAF may transmit an NF registration request message to an NRF 1300. The NRF 1300 may receive the NF registration request message from the local NWDAF 1110, 1120, 1130. The NF registration request message may include the following information.
- NWDAF identifier and address information
- Supported model ID(s) and information: supported ML model identifier and meta information (e.g., may include a supported model size, the number of parameters, etc.)
- Supported analytic ID(s): analytics ID provided through federated learning
- Data information available for ML model training: (information for data set available at the local NWDAF): the number of data samples or a data set size, a list of identifiers of network functions (data source NFs) that are connected to the local NWDAF 1110, 1120, 1130 and capable of providing data, a type and the number of instances or size of the network function set (cardinality of NF set associated to the local NWDAF), PDU session information managed by the local NWDAF 1110, 1120, 1130 (that, for example, may have a form of a number or list of identifiers of PDU sessions and include information about the number of PDU sessions for the local NWDAF 1110, 1120, 1130 to collect data), the number of UEs managed by the local NWDAF 1110, 1120, 1130 (the number of UEs for the local NWDAF 1110, 1120, 1130 to collect data), network slice instance information managed by the local NWDAF 1110, 1120, 1130 (the number of network slice instances, S-NSSAI list), data distribution information (that, for example, may be information on how independently and identically the distribution of data held or available by the local NWDAF 1110, 1120, 1130 is distributed as data distribution properties; may be expressed in the form of "Low", "Medium", "High" or "Highest" in terms of how much the data set is independent and identically distributed (i.i.d), or the degree of (non-)IID. The data distribution information may be included as some parameter value of data statistical properties.)
- service area (tracking area ID list, cell ID list, etc.)
- data network name or data network access identifier: data network information for the local NWDAF 1110, 1120, 1130 to collect data and to provide the analytics service

In operation 2, the NRF 1300 may transmit the NF registration response message to the local NWDAF 1110, 1120, 1130. For example, the NRF 1300 may store information of the local NWDAF 1110, 1120, 1130. The NRF 1300 may transmit a response message including whether successful registration of the local NWDAF 1110, 1120, 1130 is completed to the local NWDAF 1110, 1120, 1130. The local NWDAF 1110, 1120, 1130 may receive the response message from the NRF 1300.

In operation 3, the central NWDAF 1000 may transmit an NF search request message to the NRF 1300. For example, the central NWDAF 1000 may receive an analytics request message from an unspecified NF (any NF). For example, the NF may be at least one of the UE 100, (R)AN 200, UPF 300, DN 400, AMF 500, SMF 600, PCF 700, AF 800, and UDM 900 in FIG. 2. For example, the analytics request message may include at least one of an analytics ID, an FL performance request indicator, an NF-provided data sharing allowance indicator, NF-possessed or -providable data distribution information, analytics service provision time requirements, and analytics service accuracy requirements. For example, if the analytic service provision time requirement is included in the analytic request message received from an NF, the central NWDAF 1000 may transmit an NWDAF search request message including the corresponding requirement to the NRF 1300. In response to the NWDAF search request message, the central NWDAF 1000 may receive a response message including a list of NWDAFs that may satisfy the corresponding requirement from the NRF 1300. Alternatively, the central NWDAF 1000 may transmit an NWDAF search request message that does not include the corresponding requirement to the NRF 1300. The central NWDAF 1000 may determine the local NWDAF 1110, 1120, 1130 that may satisfy the corresponding requirement based on a previously stored list of available local NWDAFs.

The central NWDAF 1000 may generate an NF search request message based on an analytics request message received from the NF. For example, the NF search request message may include the following information.
- FL aggregator capability: Information to request information about the central NWDAF 1000 for serving as the FL aggregator from the NRF 1300
- Federated learning indicator: an indicator for requesting information about the NWDAF that may participate in the FL
- Central NWDAF information (address and ID)
- UE identifier or UE group identifier (may be included in a case where the analytics requested by the NF corresponds to a specific UE or UE group)
- Supported ML model information: ML model information (Identifier, etc.) supported in the central NWDAF 1000 and used for the federated learning, and since the training needs to conduct on the same model according to characteristics of the federated learning, it may be used to search a local NWDAF (a local NWDAF for participating in the FL group) supporting the same model (supported by the central NWDAF 1000 and performing the local ML model training) as the model supported by the central NWDAF 1000.
- Analytics ID: the analytics identifier requested by the NF from the central NWDAF 1000, analytics information for performing the federated learning
- Data information requirements available for ML model training: It may have data information values available for the ML model training specified in operation 1. It may be used to obtain data satisfying the corresponding requirements or to select an available NWDAF. For example, the following information may be included: the number of data samples or a data set size, a list of identifiers of network functions (data source NFs) that are connected to a local NWDAF and may provide data, a type and the number of instances or a size of the network function set (cardinality of NF set associated to the local NWDAF), PDU session information managed by a local NWDAF (e.g., it may have the form of a number and a PDU session identifier list and includes information of the number of PDU sessions for the local NWDAF to collect data), the number of UEs managed by a local NWDAF (the number of UEs for the local NWDAF to collect data), network slice instance information managed by the local NWDAF (the number of network slice instances, S-NSSAI list).

In operation 4, the NRF 1300 may transmit an NF search response message to the central NWDAF 1000. The central NWDAF 1000 may receive the NF search response message from the NRF 1300. For example, the NRF 1300 may transmit an NF search response message including local NWDAF information corresponding to the NF search request message received from the central NWDAF 1000 to the central NWDAF 1000. For example, the local NWDAF information (that may provide information about a plurality of local NWDAFs) may include the following.
- local NWDAF identifier and address list
- Data information available for ML model training of the individual local NWDAF: The number of data samples or the data set size, the list of identifiers of network functions (data source NF) that may be connected to the local NWDAF and provide data, the number of types and instances or the size of the network function set (cardinality of the NF set associated to the local NWDAF), the PDU session information managed by the local NWDAF (e.g., it may be in the form of a number and a list of PDU session identifiers and includes information about the number of PDU sessions from which the local NWDAF may collect data), the number of UEs managed by the local NWDAF (the number of UEs from which the local NWDAF may collect data), the network slice instance information managed by the local NWDAF (the number of network slice instances, the S-NSSAI list), the list of data network names managed by the local NWDAF or the list of data network access identifiers.

(For example, being managed by the NWDAF may mean that the ML model training may be conducted through collection of the corresponding data and/or learning of collected data)
- Supported ML model information of individual local NWDAFs (Supported ML model information)

The central NWDAF 1000 may generate the FL group based on the NF search response message received from the NRF 1300. For example, the operation of generating the FL group by the central NWDAF 1000 may be the identical as or similar to the operation described with respect to operation 1 in FIG. 3.

In operation 5, the central NWDAF 1000 may transmit a FL request message including a FL local behavior instruction to the local NWDAF 1110, 1120, 1130. The local NWDAF 1110, 1120, 1130 may receive the FL request message including the FL local behavior instruction from the central NWDAF 1000. For example, the operation of transmitting and receiving the FL request message may be identical or similar to the operation with respect to operation 2 in FIG. 3. For example, the central NWDAF 1000 may determine an epoch time requirement value (a requirement value for the time it takes to complete local ML model training on the local NWDAF 1110, 1120, 1130 in federated learning) based on the data information available for ML model training of the searched local NWDAF. For example, the central NWDAF 1000 may determine the size of the federated learning epoch time requirement value in proportion to the size of the data set included in the data information available for ML model training of the searched local NWDAF 1110, 1120, 1130, the number of network function instances or size of the network function set that may be connected to the local NWDAF 110, 1120, 1130 and provide data, the number of PDU sessions from which the local NWDAF 110, 1120, 1130 may collect data, the number of data network names managed by the local NWDAF 1110, 1120, 1130, and the number of data network access identifiers. The central NWDAF 1000 may transmit an FL request message including the federated learning epoch time requirement value to the local NWDAF 1110, 1120, 1130.

In operation 6, the local NWDAF 1110, 1120, 1130 may transmit a FL response message to the central NWDAF 1000 in response to the FL request message. The central NWDAF 1000 may receive the FL response message from the local NWDAF 1110, 1120, 1130. For example, the local NWDAF 1110, 1120, 1130 may perform an operation of transmitting a response to the epoch time to the central NWDAF 1000 as described with respect to operation 3 in FIG. 3.

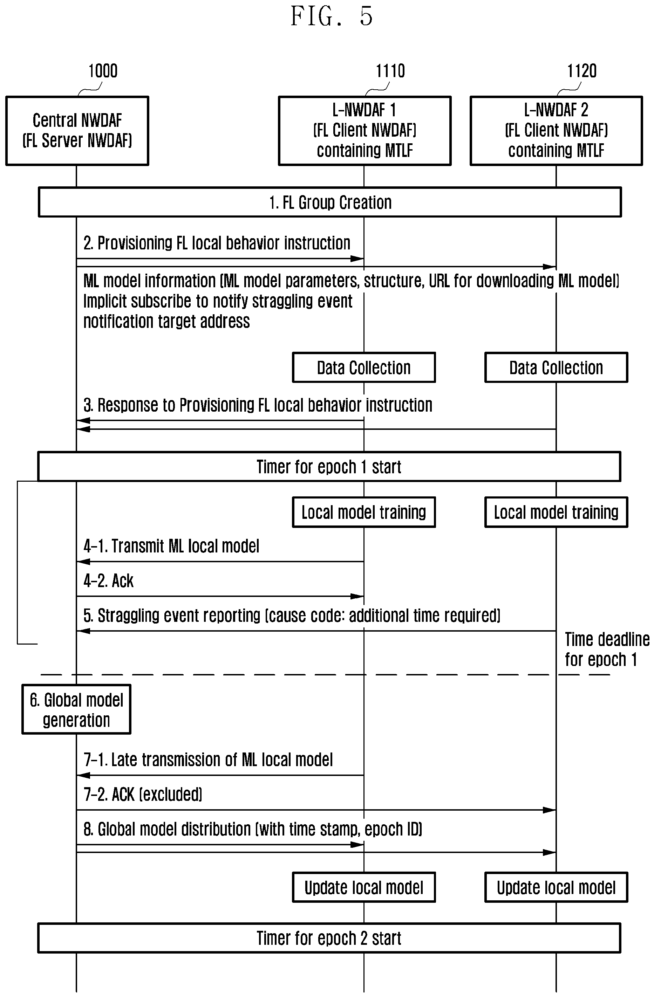

FIG. 5 is a flowchart illustrating a procedure for monitoring a delay situation occurrence event in a local NWDAF and notifying the central NWDAF of the event according to the disclosure.

With respect to FIG. 5, in operation 1, the central NWDAF 1000 may generate a FL group (FL group creation) by selecting the local NWDAF 1110, 1120 that may participate in the federated learning.

In operation 2, the central NWDAF 1000 may transmit a FL local behavior instruction to the local NWDAF 1110, 1120 participating in the federated learning. The local NWDAF 1110, 1120 may receive an FL local behavior instruction from the central NWDAF 1000. The FL local behavior instruction may include an indicator indicating to perform a report on an abnormal event or straggling event that occurs during the federated learning. For example, the FL local behavior instruction may include the following information.
- Notification target address
- List of events required to be monitored and reported: event ID(s), it may include, for example, an event ID value representing at least one of a late transmission event (a reporting event notifying that local model training time is delayed in the local NWDAF 1110, 1120 and therefore the time to transmit the local model to the central NWDAF 1000 is delayed), low accuracy event (a reporting event notifying that the accuracy of the local model trained on the local NWDAF 1110, 1120 is lower than a reference value, in a case of indicating monitoring and reporting of low accuracy events, an accuracy threshold value may be transmitted together with the event ID), data shortage occurrence event (a reporting event notifying that data sample acquisition is difficult due to an abnormal status of the data source providing data samples for local model training in the local NWDAF 1110, 1120), and the like. The above event may be expressed as a straggling event, and in a case where the FL local behavior instruction is transmitted instead of a separate subscription service, a subscription service may be formed in the form of an implicit subscribe to notify straggling event. Alternatively, a subscription to notify straggling event service may be performed through a separate subscription request message.

In the case of indicating a report on an event related to late transmission (local model transmission delay due to occurrence of a local model training delay event) among the lists which are required to be monitored and reported described above, epoch time requirement information for transmitting a reference time value may be provided together. For example, the epoch time requirement information may be expressed in the following form.
- Epoch time requirement information
   a) Expected epoch time or expected local ML model training and transmission time: When performing federated learning, an expected time value from performing local model training in the local NWDAF 1110, 1120 to transmitting the local model that has completed the training to the central NWDAF 1000
   b) Local ML model training time requirement: A required value for the time taken from completing the local model training in the local NWDAF 1110, 1120 to transmitting the trained local model to the central NWDAF 1000

In operation 3, the local NWDAF 1110, 1120 may transmit each response message for the FL local behavior instruction to the central NWDAF 1000. The central NWDAF 1000 may receive each response message for the FL local behavior instruction from the local NWDAF 1110, 1120. Each response message may include whether the local NWDAF 1110, 1120 has successfully completed its subscription, and a subscription ID.

After each response message for the FL local behavior instruction is transmitted, a timer for the start of the epoch time may be operated in the central NWDAF 1000 and local NWDAF 1110, 1120.

The local NWDAF 1110, 1120 may perform each local model training operation.

As another example, the local NWDAF 1110, 1120 may transmit a response to the FL local behavior instruction to the central NWDAF 1000 before the timer for starting the epoch time operates, as in operation 3 in FIG. 3. In this case, the local NWDAF 1110, 1120 may operate a timer for starting the epoch time after receiving a new expected epoch time requirement from the central NWDAF 1000, as in operation 4 in FIG. 3.

In operation 4-1, the local NWDAF 1 1110 may transmit the ML local model to the central NWDAF 1000. The central NWDAF 1000 may receive the ML local model from the local NWDAF 1 1110. For example, the local NWDAF 1 1110 may successfully complete the local training within the time indicated by the epoch time requirement. The local NWDAF 1 1110 may generate an ML local model based on the result of completing local training. The local NWDAF 1 1110 may transmit the generated ML local model to the central NWDAF 1000.

In operation 4-2, the central NWDAF 1000 may transmit an acknowledgement (ACK) message to the local NWDAF 1 1110 notifying that the ML local model has been successfully received. The local NWDAF 1 1110 may receive the acknowledgement message from the central NWDAF 1000.

In operation 5, the local NWDAF 2 1120 may transmit a delay situation occurrence event report message to the central NWDAF 1000. The central NWDAF 1000 may receive the delay situation occurrence event report message from the local NWDAF 2 1120. For example, the local NWDAF 2 1120 may determine that the time indicated by the epoch time requirement is approaching and that the requirement cannot be met. For example, the local NWDAF 2 1120 may determine that the local training has been completed and the local model cannot be transmitted to the central NWDAF 1000 within the time indicated by the epoch time requirement. The local NWDAF 2 1120 may generate a delay situation occurrence event report message based on the above determination. For example, the delay situation occurrence event report message may include an event ID, a subscription ID, and a cause code to determine the cause of the event occurrence.

For example, the local NWDAF 2 1120 may determine a given situation to determine the event ID and the cause code. For example, the local NWDAF 2 1120 may determine that the local model training is being performed normally and that the accuracy is improving during the training process. In this case, the local NWDAF 2 1120 may generate a delay situation occurrence event report message including a delay transmission event identifier and an additional time requirement cause code. As another example, the local NWDAF 2 1120 may detect that, during local model training, an instance of a network function, which is a data source connected to the local NWDAF 2 1120, is terminated or cannot transmit data samples any more due to overload. In this case, the local NWDAF 2 1120 may generate a delay situation occurrence event report message including a data shortage event identifier and a cause code indicating that the data source is in an abnormal state. Alternatively, the local NWDAF 2 1120 may generate a delay situation occurrence event report message including a low accuracy event identifier in a case where the accuracy value is lower than a predetermined threshold accuracy value during local model training.

The central NWDAF 1000 may transmit an acknowledgement message to the local NWDAF 2 1120 in response to the delay situation occurrence event report message received from the local NWDAF 2 1120. The local NWDAF 2 1120 may receive the acknowledgement message from the central NWDAF 1000.

In operation 6, the central NWDAF 1000 may generate a global model. For example, the central NWDAF 1000 may generate a global model based on the ML local model received from the local NWDAF 1 1110 and the delay situation occurrence event report message received from the local NWDAF 2 1120. For example, the central NWDAF 1000 may determine that the local model of the local NWDAF 2 1120 cannot be received within the epoch time based on the delay situation occurrence event report message received from the local NWDAF 2 1120. For example, the central NWDAF 1000 may determine whether to generate a global model using only some of the ML local models received from the local NWDAF 2 1120 or to exclude the local NWDAF 2 1120 from the federated learning based on the cause code received from the local NWDAF 2 1120. For example, in a case where the central NWDAF 1000 receives the delay situation occurrence event report message including an event ID for late transmission and a cause code indicating that additional time is required, the central NWDAF 1000 may generate a global model only with the local models already received from the local NWDAF 2 1120, excluding the local models whose transmission is delayed from the local NWDAF 2 1120. As another example, in a case where the central NWDAF 1000 receives a delay situation occurrence event report message in which the event ID indicates data shortage or low accuracy and the cause code indicates an abnormal status of data source, the central NWDAF 1000 may determine to exclude the local NWDAF 2 1120 from the federated learning.

In operation 7-1, the local NWDAF 2 1120 may transmit the ML local model whose transmission is delayed to the central NWDAF 1000. The central NWDAF 1000 may receive the ML local model whose transmission is delayed from the local NWDAF 2 1120. For example, the local NWDAF 2 1120 may complete the delayed local training after receiving the delayed situation occurrence event report message including the delayed transmission event in operation 5. The local NWDAF 2 1120 may generate the local model whose transmission is delayed, based on the delayed completed local training. The local NWDAF 2 1120 may transmit the local model whose transmission is delayed to the central NWDAF 1000. The local NWDAF 2 1120 may transmit an epoch time ID indicating at which epoch time the local model whose transmission is delayed was generated to the central NWDAF 1000 together with the local model whose transmission is delayed. The central NWDAF 1000 may receive the local model whose transmission is delayed and epoch time ID from the local NWDAF 2 1120.

In operation 7-2, the central NWDAF 1000 may transmit an acknowledgement message to the local NWDAF 2 1120. The local NWDAF 2 1120 may receive the acknowledgement message from the central NWDAF 1000. For example, the acknowledgement message may include an indicator indicating that the global generated model has already been completed.

In operation 8, the central NWDAF 1000 may transmit the generated global model to the local NWDAF 1110, 1120. The local NWDAF 1110, 1120 may receive the global model from the central NWDAF 1000. The global model may not be transmitted to the local NWDAF that is excluded from the federated learning. The central NWDAF 1000 may transmit the epoch time ID together with the generated global model. The local NWDAF 1110, 1120 may receive the global model and the epoch time ID from the central NWDAF 1000. The operation of operation 8 may be performed before the operation of operation 7 based on the local NWDAF 2 1120.

If the local NWDAF 2 1120 transmits a delayed situation occurrence event report message to the central NWDAF 1000 and then transmits the local model whose transmission is delayed to the central NWDAF 1000, the central NWDAF 1000 may buffer the local model whose transmission is delayed and reflect the local model whose transmission is delayed in the global model generated at the next epoch time. When buffering the local model whose transmission is delayed, the central NWDAF 1000 may store the local NWDAF identifier that has provided the corresponding local model and the epoch time ID (information that may be used to record which epoch step/time the corresponding local model was supposed to be provided at) by mapping them.

The local NWDAF 1110, 1120 may update the local model based on the received global model. The local NWDAF 1110, 1120 may perform additional local training on the updated local model.

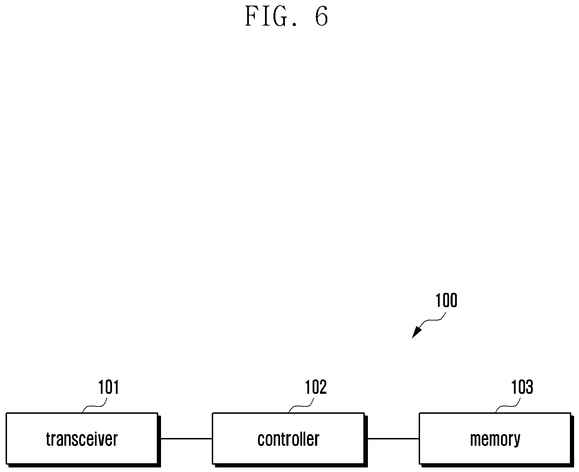

FIG. 6 is a block diagram illustrating the central NWDAF 1000 according to the disclosure.

With respect to FIG. 6, the central NWDAF 1000 according to the disclosure may include a controller 1002 that controls the overall operation of the central NWDAF 1000, a network interface 1001 including a transmitter and receiver, and a memory 1003. Apparently, it is not limited to the above example, and the central NWDAF 1000 may include more or fewer constitutions than the constitutions illustrated in FIG. 6.

According to the disclosure, the network interface 1001 may transmit and receive signals with at least one of other network entities 100, 200, 300, 400, 500, 600, 700, 800, 900, 1210, 1220, 1230, 1300 and the local NWDAF 1110, 1120, 1130. The signals transmitted and received with at least one of other network entities 100, 200, 300, 400, 500, 600, 700, 800, 900, 1210, 1220, 1230, 1300 and the local NWDAF 1110, 1120, 1130 may include control information and data.

According to the disclosure, the controller 1002 may control the central NWDAF 1000 to perform the operations in FIGS. 3 to 5 described above. Meanwhile, the controller 1002, memory 1003, and network interface 1001 do not necessarily have to be implemented as separate modules, and may be apparently implemented as a single component in the form of a single chip. In addition, the controller 1002 and network interface 1001 may be electrically connected. In addition, the controller 1002 may be an application processor (AP), a communication processor (CP), a circuit, an application-specific circuit, or at least one processor.

According to the disclosure, the memory 1003 may store data such as basic programs, application programs, and configuration information for the operation of the central NWDAF 1000. In particular, the memory 1003 provides the stored data upon request of the controller 1002. The memory 1003 may be constituted with a storage medium such as ROM, RAM, hard disc, CD-ROM and DVD, or a combination of them. Additionally, the memory 1003 may be in plural. Additionally, the controller 1002 may perform the above-described embodiments based on a program for performing the above-described embodiments of the disclosure stored in the memory 1003.

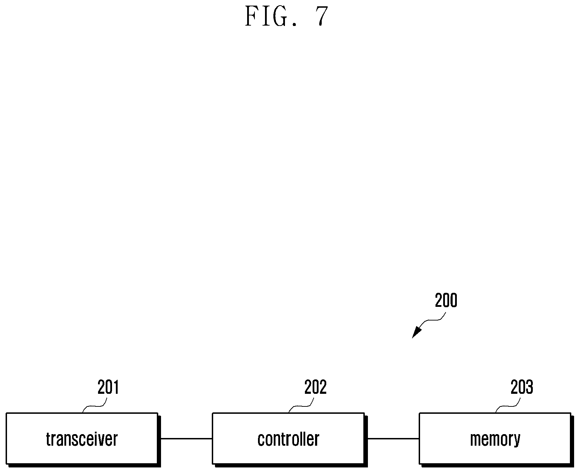

FIG. 7 is a block diagram illustrating the local NWDAF 1 1110 according to the disclosure.

With respect to FIG. 7, the local NWDAF 1 1110 according to the disclosure may include a controller 1112 that controls the overall operation of the local NWDAF 1 1110, a network interface 1111 including a transmitter and receiver, and a memory 1113. Apparently, it is not limited to the above example, and the local NWDAF 1 1110 may include more or fewer constitutions than the constitutions illustrated in FIG. 7.

According to the disclosure, the network interface 1111 may transmit and receive signals with at least one of other network entities 100, 200, 300, 400, 500, 600, 700, 800, 900, 1210, 1220, 1230, 1300 and the central NWDAF 1000. The signals transmitted and received with at least one of other network entities 100, 200, 300, 400, 500, 600, 700, 800, 900, 1210, 1220, 1230, 1300 and the central NWDAF 1000 may include control information and data.

According to the disclosure, the controller 1112 may control the local NWDAF 1 1110 to perform the operations in FIGS. 3 to 5 described above. Meanwhile, the controller 1112, memory 1113, and network interface 1111 do not necessarily have to be implemented as separate modules, and may be apparently implemented as a single component in the form of a single chip. In addition, the controller 1112 and network interface 1111 may be electrically connected. In addition, the controller 1112 may be an application processor (AP), a communication processor (CP), a circuit, an application-specific circuit, or at least one processor.

According to the disclosure, the memory 1113 may store data such as basic programs, application programs, and configuration information for the operation of the local NWDAF 1 1110. In particular, the memory 1113 provides the stored data upon request of the controller 1112. The memory 1113 may be constituted with a storage medium such as ROM, RAM, hard disc, CD-ROM and DVD, or a combination of them. Additionally, the memory 1113 may be in plural. Additionally, the controller 1112 may perform the above-described embodiments based on a program for performing the above-described embodiments of the disclosure stored in the memory 1113.

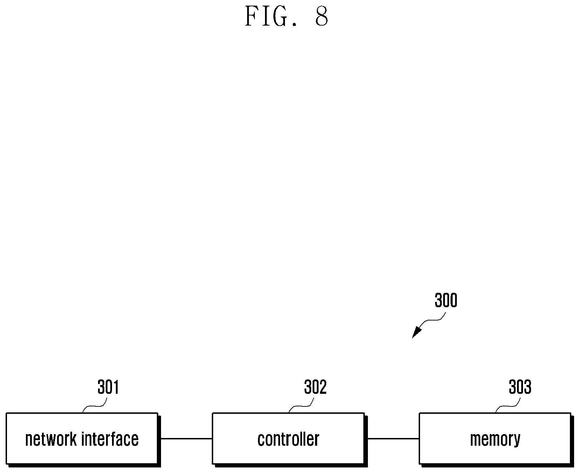

FIG. 8 is a block diagram illustrating the local NWDAF 2 1120 according to the disclosure.

With respect to FIG. 8, the local NWDAF 2 1120 according to the disclosure may include a controller 1122 that controls the overall operation of the local NWDAF 2 1120, a network interface 1121 including a transmitter and receiver, and a memory 1123. Apparently, it is not limited to the above example, and the local NWDAF 2 1120 may include more or fewer constitutions than the constitutions illustrated in FIG. 8.

According to the disclosure, the network interface 1121 may transmit and receive signals with at least one of other network entities 100, 200, 300, 400, 500, 600, 700, 800, 900, 1210, 1220, 1230, 1300 and the central NWDAF 1000. The signals transmitted and received with at least one of other network entities 100, 200, 300, 400, 500, 600, 700, 800, 900, 1210, 1220, 1230, 1300 and the central NWDAF 1000 may include control information and data.

According to the disclosure, the controller 1122 may control the local NWDAF 2 1120 to perform the operations in FIGS. 3 to 5 described above. Meanwhile, the controller 1122, memory 1123, and network interface 1121 do not necessarily have to be implemented as separate modules, and may be apparently implemented as a single component in the form of a single chip. In addition, the controller 1122 and network interface 1121 may be electrically connected. In addition, the controller 1122 may be an application processor (AP), a communication processor (CP), a circuit, an application-specific circuit, or at least one processor.

According to the disclosure, the memory 1123 may store data such as basic programs, application programs, and configuration information for the operation of the local NWDAF 2 1120. In particular, the memory 1123 provides the stored data upon request of the controller 1122. The memory 1123 may be constituted with a storage medium such as ROM, RAM, hard disc, CD-ROM and DVD, or a combination of them. Additionally, the memory 1123 may be in plural. Additionally, the controller 1122 may perform the above-described embodiments based on a program for performing the above-described embodiments of the disclosure stored in the memory 1123.

For convenience of explanation, FIGS. 6 to 8 only describe the constitutions of the central NWDAF 1000, local NWDAF 1 1110, and local NWDAF 2 1120, but the constitution of each of the data source NF 1210, 1220, 1230 in FIG. 2, and the UE 100, (R)AN 200, UPF 300, DN 400, AMF 500, SMF 600, PCF 700, AF 800, UDM 900, and local NWDAF 3 1130 in FIG. 3 may be identical to or similar to the constitution of the central NWDAF 1000 or local NWDAF 1 1110 or the constitution of the local NWDAF 2 1120.

Although the detailed description of the disclosure has described specific embodiments, it is obvious that various modifications are possible without departing from the scope of the disclosure. Therefore, the scope of the disclosure should not be limited to the described embodiments, but should be determined not only by the scope of the claims described below, but also by equivalents of the claims.

### [Industrial applicability]

The disclosure can be used in the electronics industry and the information and communication industry.

## Claims

1. An operation method of a central network data analytics function (NWDAF) comprising:
receiving an analytics request message from a network function;
determining, on the basis of the analytics request message, a local NWDAF included in a federated learning (FL) group;
transmitting an FL local behavior instruction to the local NWDAF;
receiving a response message from the local NWDAF in response to the FL local behavior instruction;
receiving, on the basis of the FL local behavior instruction, a local model generated by means of the local NWDAF from the local NWDAF;
generating a global model on the basis of the local model; and
transmitting the global model to the NWDAF.

2. The operation method of claim 1, wherein the FL local behavior instruction includes delay situation occurrence event notification request information, a parameter required to generate the global model, and epoch time requirement information.

3. The operation method of claim 2, wherein the epoch time requirement information includes expected epoch time, expected local machine learning (ML) model training and transmission time, and local ML model training time requirement.

4. The operation method of claim 3, wherein the response message includes an indicator indicating whether the expected epoch time, or the expected local ML model training and transmission time, or the local ML model training time requirement is able to be met.

5. The operation method of claim 4, wherein the response message includes a new expected epoch time, a new expected local ML model training and transmission time, or a new local ML model training time requirement in a case where the expected epoch time, or the expected local ML model training and transmission time, or the local ML model training time requirement is not able to be met.

6. The operation method of claim 5, further comprising transmitting epoch time requirement information updated on the basis of the response message to the local NWDAF in response to the response message,

7. The operation method of claim 1, further comprising transmitting an acknowledgement message to the local NWDAF in response to the received local model.

8. The operation method of claim 7, further comprising receiving a delay situation occurrence event report message in response to the acknowledgement message.

9. The operation method of claim 8, wherein the global model is generated on the basis of the delay situation occurrence event report message and the local model.

10. The operation method of claim 8, further comprising receiving a local model transmitted late from the local NWDAF on the basis of the delay situation occurrence event report message.

11. A central NWDAF comprising:
a network interface; and
a processor connected to the network interface, wherein the processor receives an analytics request message from a network function, determines, on the basis of the analytics request message, a local NWDAF included in a federated learning (FL) group, transmits an FL local behavior instruction to the local NWDAF, receives a response message from the local NWDAF in response to the FL local behavior instruction, receives, on the basis of the FL local behavior instruction, a local model generated by means of the local NWDAF from the local NWDAF, generates a global model on the basis of the local model, and transmits the global model to the NWDAF.

12. The central NWDAF of claim 11, wherein the FL local behavior instruction includes delay situation occurrence event notification request information, a parameter required to generate the global model, and epoch time requirement information.

13. The central NWDAF of claim 12, wherein the epoch time requirement information includes expected epoch time, expected local machine learning (ML) model training and transmission time, and local ML model training time requirement.

14. The central NWDAF of claim 13, wherein the response message includes an indicator indicating whether the expected epoch time, or the expected local ML model training and transmission time, or the local ML model training time requirement is able to be met.

15. The central NWDAF of claim 14, wherein the response message includes a new expected epoch time, a new expected local ML model training and transmission time, or a new local ML model training time requirement in a case where the expected epoch time, or the expected local ML model training and transmission time, or the local ML model training time requirement is not able to be met.
